# EUROPEAN PATENT APPLICATION

(11) **EP 4 518 360 A1**
(43) Date of publication of application: **05.03.2025**
(21) Application number: 23795545.5
(22) Date of filing: 27.04.2023
(51) Int. Cl.: H04W 4/02, H04W 24/10, H04W 64/00

(54) **INFORMATION TRANSMISSION METHOD AND APPARATUS, AND CARRIER PHASE POSITIONING METHOD AND APPARATUS**

(30) Priority: 29.04.2022 CN 202210476518
(71) Applicant: Datang Mobile Communications Equipment Co., Ltd., Beijing 100085 (CN)
(72) Inventor: FANG, Rongyi, Beijing 100085 (CN); REN, Bin, Beijing 100085 (CN); DA, Ren, Beijing 100085 (CN); REN, Xiaotao, Beijing 100085 (CN); LI, Hui, Beijing 100085 (CN); ZHANG, Zhenyu, Beijing 100085 (CN); YU, Zhe, Beijing 100085 (CN); SHI, Yuangu, Beijing 100085 (CN)
(74) Representative: Studio Torta S.p.A.
(86) International application number: PCT/CN2023/091167
(87) International publication number: WO 2023/208113

(57) **Abstract**

This application provides an information transmission method and apparatus, and a carrier phase positioning method and apparatus, and related to the field of communications technology. The information transmission method includes: performing, by a terminal, carrier phase measurement according to a first signal, and transmitting carrier phase measurement related information of N first carriers to a location management function LMF entity, where N is a positive integer.

## Description

### CROSS-REFERENCE TO RELATED APPLICATION

This application claims a priority to Chinese Patent Application No. 202210476518.7 filed in China on April 29, 2022, the disclosure of which is incorporated by reference herein in its entirety.

### TECHNICAL FIELD

The present disclosure relates to the field of communications technology, in particular to an information transmission method and apparatus, a carrier phase positioning method and apparatus.

### BACKGROUND

The basic principle of wireless positioning technology is that a transmitter transmits a pilot signal, and a receiver receives and measures the signal to obtain measurement values such as delay, angle, phase, etc., and then performs corresponding position calculation to obtain a position estimate value. The positioning scheme that relies on the phase measurement value has high-resolution measurement accuracy brought by its small wavelength. For example, the measurement resolution is below 8 mm under 3.5G carrier frequency. Under suitable conditions, the positioning accuracy can be improved to the millimeter level. Therefore, it is mainly used in global navigation satellite system (Global Navigation Satellite System, GNSS).

The GNSS satellite signal is a single-carrier sinusoidal signal (that is, a radio frequency sinusoidal signal of a certain fixed frequency) plus a pseudo random noise (Pseudo Random Noise, PRN) sequence or a PRN code, and a navigation data code. In order to support GNSS carrier phase positioning, the receiver needs to obtain carrier phase measurement by measuring satellite signals. Since GNSS satellite signals are single-carrier signals, the receiver can only measure the carrier phase corresponding to a single-carrier frequency for any one of the GNSS signals. Unlike the GNSS satellite signals, the new radio (New Radio, NR) system adopts an orthogonal frequency division multiplex (Orthogonal frequency division multiplex, OFDM) signal, which is a multi-carrier sinusoidal signal. As a result, the current carrier phase measurement reporting scheme based on GNSS satellite signals may not be applicable to the carrier phase measurement reporting of the NR system, and there is no specific scheme for the carrier phase measurement reporting of the NR system at present.

### SUMMARY

The present disclosure provides an information transmission method and apparatus, a carrier phase positioning method and apparatus, so as to solve a problem that there is no specific solution for carrier phase measurement reporting in NR systems at present.

In a first aspect, an embodiment of the present disclosure provides an information transmission method, including:

performing, by a terminal, carrier phase measurement according to a first signal, and transmitting carrier phase measurement related information of N first carriers to a location management function (LMF) entity, where N is a positive integer.

Optionally, the carrier phase measurement related information includes at least one of the following: carrier phase measurement values of the first carriers; identification information of the first carriers; or at least one parameter corresponding to the first carrier, where the at least one parameter is used to indicate a correlation between the carrier phase measurement value of the first carrier and a carrier phase measurement value of a second carrier within an effective frequency-domain range where the first carrier is located.

Optionally, the at least one parameter includes: a slope value, and/or a target value used to indicate the effective frequency-domain range, and the slope value is determined by carrier phase measurement values of a plurality of carriers within the effective frequency-domain range.

Optionally, the identification information includes at least one of the following: a carrier index; a center carrier frequency; or a carrier spacing.

Optionally, the carrier phase measurement value includes at least one of the following:
a carrier phase measurement absolute value of the first carrier;
a carrier phase measurement relative value of the first carrier and a reference carrier; or
a carrier phase measurement relative value of a target base station and a reference base station on the first carrier.

Optionally, the carrier phase measurement related information further includes: reliability information of the carrier phase measurement values; where the reliability information includes at least one of the following: indication information used to indicate line of sight or non line of sight, a spectrum peak slope of a first path, a Rician factor, a carrier-to-noise ratio, a signal-to-noise ratio, a reception/transmission timing error group (Receive/Transport Timing Error Group, Rx/Tx TEG) of the terminal, an antenna phase center offset, a timestamp, a reference signal received power (RSRP), a first path RSRP, an additional path RSRP, a downlink reference signal time difference (DL-RSTD), or a downlink angle of departure (DL-AOD).

Optionally, the transmitting the carrier phase measurement related information of the N first carriers to the location management function (LMF) entity includes: transmitting, by the terminal, the carrier phase measurement related information of the N first carriers in one or more carrier components to the LMF entity.

Optionally, the transmitting the carrier phase measurement related information of the N first carriers to the location management function (LMF) entity includes: transmitting, by the terminal, the carrier phase measurement related information of the N carriers on one or more symbols to the LMF entity.

Optionally, the transmitting the carrier phase measurement related information of the N first carriers to the location management function (LMF) entity includes:
periodically transmitting, by the terminal, the carrier phase measurement related information of the N first carriers to the LMF entity; or,
transmitting, by the terminal, the carrier phase measurement related information of the N first carriers to the LMF entity, when determining that a measurement reporting trigger condition is met.

Optionally, the first signal is a positioning reference signal (Positioning Reference Signal, PRS) transmitted by a base station.

In a second aspect, an embodiment of the present disclosure provides an information transmission method, including:
performing, by a base station, carrier phase measurement according to a second signal, and transmitting carrier phase measurement related information of N first carriers to a location management function (LMF) entity, where N is a positive integer.

Optionally, the carrier phase measurement related information includes at least one of the following: carrier phase measurement values of the first carriers; identification information of the first carriers; or at least one parameter corresponding to the first carrier, where the at least one parameter is used to indicate a correlation between the carrier phase measurement value of the first carrier and a carrier phase measurement value of a second carrier within an effective frequency-domain range where the first carrier is located.

Optionally, the at least one parameter includes: a slope value, and/or a target value used to indicate the effective frequency-domain range, where the slope value is determined by carrier phase measurement values of a plurality of carriers within the effective frequency-domain range.

Optionally, the identification information includes at least one of the following: a carrier index; a center carrier frequency; or a carrier spacing.

Optionally, the carrier phase measurement value includes at least one of the following:
a carrier phase measurement absolute value of the first carrier; or
a carrier phase measurement relative value of the first carrier and a reference carrier.

Optionally, the carrier phase measurement related information further includes: reliability information of the carrier phase measurement values; the reliability information includes at least one of the following: indication information used to indicate line of sight or non line of sight, a spectrum peak slope of a first path, a Rician factor, a carrier-to-noise ratio, a signal-to-noise ratio, a reception/transmission timing error group (Rx/Tx TEG) of a TRP, an antenna phase center offset, a reported timestamp, a reference signal received power (RSRP), a first path RSRP, an additional path RSRP, a uplink time difference of arrival (UL-TDOA), or an uplink angle of arrival (UL-AOA).

Optionally, the transmitting the carrier phase measurement related information of the N first carriers to the location management function (LMF) entity includes: transmitting, by the base station, the carrier phase measurement related information of the N first carriers in one or more carrier components to the LMF entity.

Optionally, the transmitting the carrier phase measurement related information of the N first carriers to the location management function (LMF) entity includes: transmitting, by the base station, the carrier phase measurement related information of the N carriers on one or more symbols to the LMF entity.

Optionally, the transmitting the carrier phase measurement related information of the N first carriers to the location management function (LMF) entity includes:
periodically transmitting, by the base station, the carrier phase measurement related information of the N first carriers to the LMF entity; or,
transmitting, by the base station, the carrier phase measurement related information of the N first carriers to the LMF entity, when determining that a measurement reporting trigger condition is met.

Optionally, the second signal is a sounding reference signal (SRS) transmitted by a terminal.

In a third aspect, an embodiment of the present disclosure provides a carrier phase positioning method, including:
receiving, by a location management function (LMF) entity, carrier phase measurement related information of N first carriers transmitted by a terminal or a base station; where N is a positive integer; and
performing, by the LMF entity, calculation processing on a position of the terminal based on the carrier phase measurement related information.

Optionally, in a case where the carrier phase measurement related information includes carrier phase measurement values of first carriers and at least one parameter corresponding to the first carrier, the performing, by the LMF entity, calculation processing on the position of the terminal based on the carrier phase measurement related information includes:
determining, by the LMF entity, a carrier phase measurement value of a second carrier within an effective frequency-domain range where the first carrier is located, based on the at least one parameter corresponding to the first carrier and the carrier phase measurement values of the first carriers;
determining, by the LMF entity, an optimal carrier phase measurement value from the carrier phase measurement values of the N first carriers and the carrier phase measurement values of the second carriers based on the carrier phase measurement related information; and
performing, by the LMF entity, calculation processing on a position of the terminal based on the optimal carrier phase measurement value.

In a fourth aspect, an embodiment of the present disclosure provides an information transmission apparatus, which includes a memory, a transceiver, and a processor. The memory is configured to store a computer program; the transceiver is configured to transmit and receive data under the control of the processor; the processor is configured to read the computer program in the memory to perform the following operations:
performing carrier phase measurement according to a first signal, and transmitting carrier phase measurement related information of N first carriers to a location management function (LMF) entity, where N is a positive integer.

Optionally, the carrier phase measurement related information includes at least one of the following: carrier phase measurement values of the first carriers; identification information of the first carriers; or at least one parameter corresponding to the first carrier, where the at least one parameter is used to indicate a correlation between the carrier phase measurement value of the first carrier and a carrier phase measurement value of a second carrier within an effective frequency-domain range where the first carrier is located.

Optionally, the carrier phase measurement related information further includes: reliability information of the carrier phase measurement values; where the reliability information includes at least one of the following: indication information used to indicate line of sight or non line of sight, a spectrum peak slope of a first path, a Rician factor, a carrier-to-noise ratio, a signal-to-noise ratio, a reception/transmission timing error group (Rx/Tx TEG) of the terminal, an antenna phase center offset, a timestamp, a reference signal received power (RSRP), a first path RSRP, an additional path RSRP, a downlink reference signal time difference (DL-RSTD), or a downlink angle of departure (DL-AOD).

Optionally, the processor is configured to read the computer program in the memory to: transmit the carrier phase measurement related information of the N first carriers in one or more carrier components to the LMF entity.

Optionally, the processor is configured to read the computer program in the memory to: transmit the carrier phase measurement related information of the N carriers on one or more symbols to the LMF entity.

Optionally, the processor is configured to read the computer program in the memory to perform the following operations:
periodically transmitting the carrier phase measurement related information of the N first carriers to the LMF entity; or,
transmitting the carrier phase measurement related information of the N first carriers to the LMF entity, when determining that a measurement reporting trigger condition is met.

In a fifth aspect, an embodiment of the present disclosure provides an information transmission apparatus, including:
a transmitting unit, configured to perform carrier phase measurement according to a second signal, and transmit carrier phase measurement related information of N first carriers to a location management function (LMF) entity, where N is a positive integer.

In a sixth aspect, an embodiment of the present disclosure provides an information transmission apparatus, which includes a memory, a transceiver, and a processor. The memory is configured to store a computer program; the transceiver is configured to transmit and receive data under the control of the processor; the processor is configured to read the computer program in the memory to perform the following operations: performing carrier phase measurement according to a second signal, and transmitting carrier phase measurement related information of N first carriers to a location management function (LMF) entity, where N is a positive integer.

Optionally, the carrier phase measurement related information includes at least one of the following: carrier phase measurement values of the first carriers; identification information of the first carriers; or at least one parameter corresponding to the first carrier, where the at least one parameter is used to indicate a correlation between the carrier phase measurement value of the first carrier and a carrier phase measurement value of a second carrier within an effective frequency-domain range where the first carrier is located.

Optionally, the carrier phase measurement related information further includes: reliability information of the carrier phase measurement values; the reliability information includes at least one of the following: indication information used to indicate line of sight or non line of sight, a spectrum peak slope of a first path, a Rician factor, a carrier-to-noise ratio, a signal-to-noise ratio, a reception/transmission timing error group (Rx/Tx TEG) of a TRP, an antenna phase center offset, a reported timestamp, a reference signal received power (RSRP), a first path RSRP, an additional path RSRP, a uplink time difference of arrival (UL-TDOA), or an uplink angle of arrival (UL-AOA).

Optionally, the processor is configured to read the computer program in the memory to: transmit the carrier phase measurement related information of the N first carriers in one or more carrier components to the LMF entity.

Optionally, the processor is configured to read the computer program in the memory to: transmit the carrier phase measurement related information of the N carriers on one or more symbols to the LMF entity.

Optionally, the processor is configured to read the computer program in the memory to perform the following operations:

periodically transmitting the carrier phase measurement related information of the N first carriers to the LMF entity; or,
transmitting the carrier phase measurement related information of the N first carriers to the LMF entity, when determining that a measurement reporting trigger condition is met.

In a seventh aspect, an embodiment of the present disclosure provides an information transmission apparatus, including:
a transmitting unit, configured to perform carrier phase measurement according to a first signal, and transmit carrier phase measurement related information of N first carriers to a location management function (LMF) entity, where N is a positive integer.

In an eighth aspect, an embodiment of the present disclosure provides a carrier phase positioning apparatus, which includes a memory, a transceiver, and a processor. The memory is configured to store a computer program; the transceiver is configured to transmit and receive data under the control of the processor; the processor is configured to read the computer program in the memory to perform the following operations:
receiving carrier phase measurement related information of N first carriers transmitted by a terminal or a base station; where N is a positive integer; and
performing calculation processing on a position of the terminal based on the carrier phase measurement related information.

In a ninth aspect, an embodiment of the present disclosure provides a carrier phase positioning apparatus, including:
a receiving unit, configured to receive carrier phase measurement related information of N first carriers transmitted by a terminal or a base station; where N is a positive integer; and
a processing unit, configured to perform calculation processing on a position of the terminal based on the carrier phase measurement related information.

In a tenth aspect, an embodiment of the present disclosure provides a processor readable storage medium. The processor readable storage medium stores a computer program, the computer program is configured to cause a processor to execute steps of the above information transmission method on the side of the terminal, or steps of the above information transmission method on the side of the base station, steps of the above carrier phase positioning method on the side of the LMF entity.

The beneficial effects of the above technical solutions of the present disclosure are as follows. In the above solutions, in the NR system, the terminal or base station can perform carrier phase measurement based on a reference signal and transmit carrier phase measurement related information of N carriers to the LMF entity, which realizes the reporting of carrier signal measurement related information in the NR system, so as to solve a problem that there is no specific scheme for the carrier phase measurement reporting of the current NR system.

### BRIEF DESCRIPTION OF THE DRAWINGS

FIG. 1 shows a flow chart of an information transmission method on a terminal side according to an embodiment of the present disclosure;
FIG. 2 shows a schematic diagram of determining a slope value according to an embodiment of the present disclosure;
FIG. 3 shows a flow chart of an information transmission method on a base station side according to an embodiment of the present disclosure;
FIG. 4 shows a flow chart of a carrier phase positioning method according to an embodiment of the present disclosure;
FIG. 5 shows a schematic diagram of a windowing operation according to an embodiment of the present disclosure;
FIG. 6 shows a first block diagram of an information transmission apparatus on the terminal side according to an embodiment of the present disclosure;
FIG. 7 shows a second block diagram of an information transmission apparatus on the terminal side according to an embodiment of the present disclosure;
FIG. 8 shows a first block diagram of an information transmission apparatus on the base station side according to an embodiment of the present disclosure;
FIG. 9 shows a second block diagram of an information transmission apparatus on the base station side according to an embodiment of the present disclosure; and
FIG. 10 shows a block diagram of a carrier phase positioning apparatus according to an embodiment of the present disclosure.

### DETAILED DESCRIPTION

In order to make a to-be-solved technical problem, a technical solution and advantages of the present disclosure clearer, a detailed description will be given below in conjunction with the accompanying drawings and specific embodiments. In the following description, specific details such as specific configurations and components are provided merely to assist in a comprehensive understanding of the embodiments of the present disclosure. Therefore, those skilled in the art should be appreciated that various changes and modifications can be made to the embodiments described herein without departing from the scope and spirit of the present disclosure. In addition, for clarity and conciseness, descriptions of known functions and constructions have been omitted.

It should be appreciated that "an embodiment" or "one embodiment" mentioned throughout the specification means that specific features, structures, or characteristics related to the embodiment are included in at least one embodiment of the present disclosure. Therefore, words "in an embodiment" or "in one embodiment" appearing throughout the entire specification may not necessarily refer to the same embodiment. In addition, these specific features, structures, or characteristics can be combined in one or more embodiments in any suitable manner.

In various embodiments of the present disclosure, it should be appreciated that the size of a sequence number of each of the following processes does not imply the order of execution, and the execution order of each process should be determined based on the function and internal logic of the each process, which should not constitute any limitations on the implementation process of the present disclosure.

Additionally, terms "system" and "network" are often used interchangeably in this specification.

The technical solutions provided by the embodiments of the present application can be applied to a variety of systems, especially 5th generation mobile communication technology (5th Generation Mobile Communication Technology, 5G) systems. For example, an applicable system may be a global system of mobile communication (global system of mobile communication, GSM) system, a code division multiple access (code division multiple access, CDMA) system, a wideband code division multiple access (Wideband Code Division Multiple Access, WCDMA), a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, an universal mobile telecommunication system (universal mobile telecommunication system, UMTS), a worldwide interoperability for microwave access (worldwide interoperability for microwave access, WiMAX) system, 5G New Radio, NR) system, etc. Each of the various systems includes a terminal and a network device. The systems may further include a core network part, such as an evolved packet system (Evolved Packet System, EPS), a 5G system (5G System, 5GS), etc.

The network device and the terminal may each perform multi-input multi-output (Multi Input Multi Output, MIMO) transmission with each other by using one or more antennas. The MIMO transmission may be single user MIMO (Single User MIMO, SU-MIMO) or multiple user MIMO (Multiple User MIMO, MU-MIMO). According to the configuration and the quantity of antenna combinations, the MIMO transmission may be 2 dimensions MIMO (2 Dimensions MIMO, 2D-MIMO), 3 Dimensions MIMO (3 Dimensions MIMO, 3D-MIMO), full dimension MIMO (Full Dimension MIMO, FD-MIMO) or massive-MIMO (massive-MIMO), and may be diversity transmission, pre-coded transmission, beam forming transmission, or the like.

In the embodiment of the present disclosure, term "and/or" describes an association relationship of associated objects, indicating that there may be three types of relationships. For example, A and/or B, which can represent three situations of A alone, both A and B, and B alone. The character "/" generally indicates that the associated objects before and after the character is in an "or" relationship.

In the embodiments of this application, the term "multiple" in the embodiments of the present disclosure refers to two or more, and other quantifiers are similar thereto.

The technical solution of embodiments of the present disclosure will be clearly and completely described hereinafter in conjunction with the accompanying drawings. Apparently, the described embodiments merely relate to a part of, rather than all of, the embodiments of the present disclosure, and based on these embodiments, a person of ordinary skill in the art may obtain other embodiments without creative effort, which shall also fall within the scope of the present disclosure.

The NR system adopts the OFDM signal, which is a multi-carrier sinusoidal signal, and data to be transmitted is modulated on each sub-carrier. To support NR carrier phase positioning, a receiver needs to measure an NR signal to obtain a carrier phase measurement value.

Since the NR signal is a multi-carrier signal, for a signal from any user equipment (UE) or base station, the receiver may provide a phase measurement value corresponding to a certain carrier, or may provide phase measurement values corresponding to multiple carriers. The potential advantage of providing phase measurements of multiple carriers is the ability to quickly resolve a problem of ambiguity of whole cycles in the carrier phase measurement by means of relevant algorithms (such as Chinese remainder theorem (Chinese Remainder Theorem, CRT) algorithm). Considering that the current GNSS carrier phase measurement reporting method may not be suitable for NR carrier phase measurement reporting. Therefore, for the NR carrier phase positioning, embodiments of the present disclosure provide an information transmission method, a carrier phase positioning method and a terminal to solve the problem of no specific solution for carrier phase measurement reporting in NR systems currently.

The method and the apparatus are based on the same application concept. Since principles of the method and the apparatus to solve the problem are similar, the implementation of the device and the method can be referred to each other, and the repeated details will not be described.

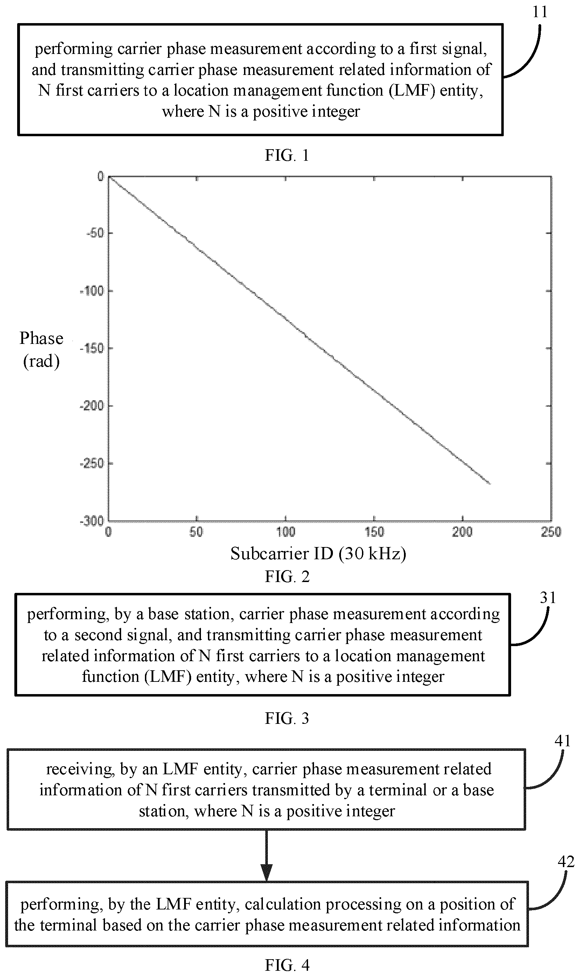

As shown in FIG. 1, an embodiment of the present disclosure provides an information transmission method, which includes the following steps.

Step 11: performing carrier phase measurement according to a first signal, and transmitting carrier phase measurement related information of N first carriers to a location management function (LMF) entity, where N is a positive integer.

Optionally, the first signal may be a PRS transmitted by a base station. For example, in an NR system, the signal is transmitted on multiple symbols and multiple carriers, and the carrier here may also be referred to as subcarrier.

For example, the terminal may receive a PRS transmitted by the base station on at least one carrier of multiple carriers, or receive PRSs transmitted by multiple base stations on a same carrier. The terminal performs carrier phase measurement based on at least one received PRS to obtain a carrier phase measurement result.

For example, the base station (or transmission reception point (Transmission Reception Point, TRP)) may transmit PRS(s) on M carriers in L carrier components (CCs) on G symbols, where G, L and M are positive integers, one symbol may include L carrier components, and one carrier component may include M carriers.

The terminal receives the PRS(s) on the M carriers in the L carrier component on the G symbols, and performs measurement to obtain carrier phase measurement results on the M carriers in the L carrier component on the G symbols, such as a carrier phase measurement value (first path phase or composition phase of multiple paths), reliability information of the carrier phase measurement value, etc. The reliability information is used to indicate the reliability of the carrier phase measurement value. For example, the LMF may select multiple optimal carrier phase measurement values based on the reliability information to perform position calculation processing. For example, position calculation processing may be performed using algorithms, such as multi-symbols filtering, phase locked loop (Phase Locked Loop, PLL), Chinese remainder theorem (CRT) and differential processing.

In the above solution, in the NR system, the terminal can perform carrier phase measurement based on a reference signal and can transmit carrier phase measurement related information of N carriers to the LMF entity, which realizes reporting of carrier signal measurement related information in the NR system, thereby solving a problem that there is no specific scheme for the carrier phase measurement reporting of the current NR system.

Optionally, the terminal performs measurement according to the PRS transmitted by the base station, to obtain a carrier phase measurement result, and transmits carrier phase measurement related information to the LMF. The carrier phase measurement related information includes at least one of the following: carrier phase measurement values of the first carriers; identification information of the first carriers; or at least one parameter corresponding to each first carrier, where the at least one parameter is used to indicate a correlation between the carrier phase measurement value of the first carrier and a carrier phase measurement value of a second carrier within an effective frequency-domain range where the first carrier is located.

Optionally, a unit of the carrier phase measurement value may be radian (Rad) or cycle (Cycle).

For example, the terminal and the LMF may be aligned to determine which piece or pieces of carrier phase measurement related information needs to be reported through pre-configuration (such as agreement by a protocol or configuration by the network side). In this case, the carrier phase measurement related information reported by the terminal may include the carrier phase measurement values of the first carriers without including the identification information of the first carriers.

For another example, the carrier phase measurement related information reported by the terminal further includes: the carrier phase measurement values of the first carriers and the identification information of the first carriers. In this way, the terminal and the LMF can dynamically report the carrier phase measurement values of the N first carriers. In this way, carrier phase measurement values of carriers having the better performance can be selected for reporting, which is also beneficial to improving positioning accuracy.

For another example, the terminal and the LMF may be aligned to determine which piece or pieces of carrier phase measurement related information needs to be reported through pre-configuration (such as protocol agreement or configuration by the network side). In this case, the carrier phase measurement related information reported by the terminal may include: the carrier phase measurement values of the first carriers and at least one parameter corresponding to each first carrier; where the at least one parameter is used to indicate a correlation between the carrier phase measurement value of the first carrier and a carrier phase measurement value of a second carrier within an effective frequency-domain range where the first carrier is located.

The effective frequency-domain range may be pre-configured (for example, indicated by the network side or agreed by a protocol), or the effective frequency-domain range may also be dynamically indicated. For example, in a case where the effective frequency-domain range is pre-configured, a parameter may be used to indicate the correlation between the carrier phase measurement value of the first carrier and the carrier phase measurement value of the second carrier within the effective frequency-domain range where the first carrier is located. For another example, in a case where the effective frequency-domain range is dynamically indicated, one parameter may be used to indicate the effective frequency-domain range, and another parameter may be used to indicate the correlation between the carrier phase measurement value of the first carrier and the carrier phase measurement value of the second carrier within the effective frequency-domain range where the first carrier is located.

In the embodiment, the terminal reports the carrier phase measurement values of the N first carriers and at least one parameter corresponding to each first carrier. The LMF entity side can obtain carrier phase measurement values of multiple second carriers associated with each first carrier, based on the carrier phase measurement values of the N first carriers and at least one parameter corresponding to each first carrier, thereby ensuring that the LMF entity side obtains carrier phase measurement values of more carriers while reducing reporting overhead, and contributing to improving the positioning accuracy.

For another example, the carrier phase measurement related information includes: carrier phase measurement values of the first carriers, identification information of the first carriers, and at least one parameter corresponding to each first carrier; where the at least one parameter is used to indicate a correlation between the carrier phase measurement value of the first carrier and a carrier phase measurement value of a second carrier within an effective frequency-domain range where the first carrier is located. In this way, the terminal and the LMF can dynamically report the carrier phase measurement values of the N first carriers by reporting the identification information, and carrier phase measurement value(s) of carrier(s) with the better performance can be selected for reporting, which is also beneficial to improving positioning accuracy. Furthermore, the LMF entity side can obtain the carrier phase measurement values of multiple second carriers associated with each first carrier, based on the carrier phase measurement values of the N first carriers and at least one parameter corresponding to each of the first carriers, thereby ensuring that the LMF entity side obtains carrier phase measurement values of more carriers while reducing reporting overhead, and contributing to improving the positioning accuracy.

The carrier phase measurement value may include but not limited to at least one of the following:
a carrier phase measurement absolute value of the first carrier;
a carrier phase measurement relative value of the first carrier and a reference carrier; or
a carrier phase measurement relative value of a target base station and a reference base station on the first carrier.

For example, for multiple carriers, carrier phase measurement values on various carriers may be measured individually, that is, carrier phase measurement absolute values of the first carrier and the reference carrier; it is also possible to measure a measurement value of each carrier relative to the reference carrier, that is, the carrier phase measurement relative value. The carrier phase measurement relative value may be a difference between carrier phase measurement values of each carrier and the reference carrier, or a ratio of the carrier phase measurement value of each carrier to the carrier phase measurement value of the reference carrier. The embodiments of the present disclosure are not limited thereto.

In addition, for one carrier, the terminal may receive PRSs from multiple base stations on the one carrier, the terminal may measure a carrier phase measurement value of each base station relative to the reference base station, that is, the carrier phase measurement relative value of the target base station and the reference base station. Here, the carrier phase measurement relative value may be a difference between carrier phase measurement values of each base station and the reference base station, or a ratio of the carrier phase measurement value of each base station to the carrier phase measurement value of the reference base station. The embodiments of the present disclosure are not limited thereto.

The identification information includes but is not limited to at least one of the following: a carrier index, a center carrier frequency, or a carrier spacing.

For example, a bandwidth range corresponding to the center carrier frequency may include multiple carriers. The distance between adjacent carriers is the carrier spacing (or referred to as subcarrier spacing), and each carrier corresponds to its own carrier index (or referred to as carrier number, carrier identity (Identity, ID), etc.). In this way, the terminal reports identification information such as the carrier index, the center carrier frequency, and the carrier spacing to the LMF, to enable the LMF to know which carrier the received carrier phase measurement value belongs to. For example, a frequency corresponding to the carrier may be determined based on the carrier index, the carrier spacing and the center carrier frequency.

In addition, a manner of reporting the carrier frequency includes reporting a ratio of a frequency of a reported carrier to the center carrier frequency, a predefined subcarrier frequency table in combination with the center carrier frequency or subcarrier ID, and the like, which are also within the scope of this reporting scheme.

Optionally, the at least one parameter includes: a slope value, and/or a target value used to indicate the effective frequency-domain range, and the slope value is determined based on carrier phase measurement values of multiple carriers within the effective frequency-domain range.

For example, the slope value may be determined through carrier phase measurement values of multiple carriers within the effective frequency-domain range where each first carrier is located, and the correlation between the carrier phase measurement value of the first carrier and the carrier phase measurement value of the second carrier within the effective frequency-domain range where the first carrier is located is indicated through the slope value. Referring to FIG. 2, the horizontal axis represents the carrier index, and the vertical axis represents the carrier phase measurement value. For example, one effective frequency-domain range is from carrier 50 to carrier 150, and a straight line or a curve may be determined based on carrier phase measurement values of multiple carriers within carrier 50 to carrier 150, for example, selecting carrier 110 as the first carrier (that is, selecting a target carrier or a reference carrier). A correlation between carrier phase measurement values of other carriers from carrier 50 to carrier 150 and the carrier phase measurement value of the first carrier may be indicated through the slope value of the straight line or the curve.

It should be noted that, in an embodiment of the present disclosure, the slope value may be used to indicate carrier phase measurement values of multiple carriers within the effective frequency-domain range of the first carrier, and a specific manner of determining the slope value is not limited in the embodiments of the disclosure.

Optionally, the carrier phase measurement related information further includes: reliability information of the carrier phase measurement values; where the reliability information includes at least one of the following: indication information used to indicate line of sight or non line of sight, a spectrum peak slope of a first path, a Rician factor, a carrier-to-noise ratio, a signal-to-noise ratio, a reception/transmission timing error group (Rx/Tx TEG) of the terminal, a phase center offset of an antenna, a timestamp, a reference signal received power (RSRP), a first path RSRP, an additional path RSRP, a downlink reference signal time difference (DL-RSTD), or a downlink angle of departure (DL-AOD).

Optionally, the reliability information may be used to indicate the reliability of the carrier phase measurement value. For example, the LMF side may select multiple carrier phase measurement values with the best performance based on the reliability information to perform position calculation, thereby improving positioning accuracy.

Optionally, the transmitting the carrier phase measurement related information of the N first carriers to the location management function (LMF) entity includes: transmitting, by the terminal, the carrier phase measurement related information of the N first carriers in one carrier component or multiple carrier components to the LMF entity.

In the embodiment, in reporting the carrier phase measurement related information of multiple carriers to the LMF entity, the terminal may support reporting the carrier phase measurement related information of the N first carriers in one carrier component to the LMF entity, and may also support reporting the carrier phase measurement related information of the N first carriers in multiple carrier components.

For example, in reporting the carrier phase measurement related information of the N first carriers in multiple carrier components, carrier phase measurement related information of the same number of first carriers may be reported for each carrier component. In this case, the number of carrier phase measurement values of first carriers in each carrier component may be pre-configured or dynamically indicated, or indicated in other manners, and the embodiments of the present disclosure are not limited thereto. Alternatively, carrier phase measurement related information of different numbers of first carriers may also be reported for different carrier components. Optionally, identification information of carrier components may be reported simultaneously in the reporting of multiple carrier components, to enable the LMF entity to learn in which carrier component the first carriers are reported by the terminal.

One carrier component may include multiple carriers within a partial bandwidth range of a frequency-domain range corresponding to the center carrier.

Optionally, the transmitting the carrier phase measurement related information of the N first carriers to the location management function (LMF) entity includes: transmitting, by the terminal, the carrier phase measurement related information of the N carriers on one symbol or multiple symbols to the LMF entity.

In the embodiment, when reporting carrier phase measurement related information of multiple carriers to the LMF entity, the terminal may support reporting the carrier phase measurement related information of the N first carriers on one symbol to the LMF entity, and may also support reporting the carrier phase measurement related information of the N first carriers on multiple symbols.

For example, when reporting the carrier phase measurement related information of the N first carriers on multiple symbols, carrier phase measurement related information of the same number of first carriers may be reported for each symbol. In this case, the number of carrier phase measurement values of first carriers on each symbol may be pre-configured or dynamically indicated, or indicated in other manners, and the embodiments of the present disclosure are not limited thereto. Alternatively, carrier phase measurement related information of different numbers of first carriers may also be reported for different symbols. Optionally, identification information of symbols may be reported simultaneously in the reporting of multiple symbols, to enable the LMF entity to learn in which symbols the first carriers are reported by the terminal.

Optionally, the transmitting the carrier phase measurement related information of the N first carriers to the location management function (LMF) entity includes:
periodically transmitting, by the terminal, the carrier phase measurement related information of the N first carriers to the LMF entity; or,
transmitting, by the terminal, the carrier phase measurement related information of the N first carriers to the LMF entity, when determining that a measurement reporting trigger condition is met.

The measurement reporting trigger condition may be based on positioning requirements, or may be that a parameter value of the reliability information (such as RSRP/SNR/CNR, etc.) reaches a first threshold. The first threshold may be defined by a protocol or configured by the network side, etc. The embodiments of the application are not limited thereto.

In the above solution of the present disclosure, a scheme for transmitting information related to carrier signal measurement is provided for multi-carrier signals under the NR system, which solves a problem that there is no specific solution for carrier phase measurement reporting in the existing NR system. This solution provides a variety of ways to report information related to carrier signal measurement, which can save signaling overhead and improve positioning accuracy. Moreover, the reliability information of the carrier phase measurement values is also reported, so that the LMF entity side can screen carrier phase measurement values with higher reliability for position calculation processing based on the information, which contributes to improving the positioning accuracy.

The terminal involved in the embodiments of this application may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (User Equipment, UE). A wireless terminal can communicate with one or more core networks (Core Network, CN) via a radio access network (Radio Access Network, RAN), and the wireless terminal may be a mobile terminal, such as a mobile phone (or referred to as "cellular" phone) and a computer with a mobile terminal, such as a portable, pocket-sized, handheld, computer built-in or vehicle-mounted mobile apparatus, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. The wireless terminal may also be referred to as a system, subscriber unit (subscriber unit), subscriber station (subscriber station), mobile station (mobile station), mobile (mobile), remote station (remote station), access point (access point), remote terminal (remote terminal), access terminal (access terminal), user terminal (user terminal), user agent (user agent) and user device (user device), which are not limited in the embodiments of the present disclosure.

As shown in FIG. 3, an embodiment of the present disclosure provides an information transmission method, including the following steps.

Step 31: performing, by a base station, carrier phase measurement according to a second signal, and transmitting carrier phase measurement related information of N first carriers to a location management function (LMF) entity, where N is a positive integer.

Optionally, the second signal may be an SRS transmitted by a terminal. For example, a multi-carrier signal is used in the NR system, and the carrier here may also be referred to as subcarrier.

For example, the base station may receive an SRS transmitted by a terminal on at least one carrier of multiple carriers, or may receive SRSs transmitted by multiple terminals on a same carrier, etc. The terminal performs carrier phase measurement based on at least one received SRS to obtain a carrier phase measurement result.

For example, the terminal may transmit SRSs on M carriers in L carrier components (Carrier Component, CC) on G symbols, where G, L and M are positive integers, and one symbol may include L carrier components, and one carrier component may include M carriers.

The base station receives the SRSs on the M carriers in the L carrier component on the G symbols, and performs measurement to obtain carrier phase measurement results on the M carriers in the L carrier component om the G symbols, such as a first path phase, carrier phase measurement values, reliability information of the carrier phase measurement values, etc. The reliability information is used to indicate the reliability of the carrier phase measurement values. For example, the LMF may select multiple optimal carrier phase measurement values based on the reliability information to perform position calculation processing. For example, position calculation processing may be performed using algorithms, such as multi-symbols filtering, phase locked loop (PLL), Chinese remainder theorem (CRT) and differential processing.

In the above solution, in the NR system, the base station can perform carrier phase measurement based on the reference signal and can transmit carrier phase measurement related information of N carriers to the LMF entity, which realizes the reporting of carrier signal measurement related information in the NR system, so as to solve a problem that there is no specific scheme for the carrier phase measurement reporting of the current NR system.

Optionally, the base station performs measurement according to the SRS transmitted by the terminal to obtain the carrier phase measurement result, and transmits the carrier phase measurement related information. The carrier phase measurement related information includes at least one of the following: carrier phase measurement values of the first carrier(s); identification information of the first carrier(s); or the at least one parameter used to indicate a correlation between the carrier phase measurement value of the first carrier and carrier phase measurement value(s) of second carrier(s) within an effective frequency-domain range where the first carrier is located.

For example, the base station and the LMF may be aligned to determine which piece or pieces of carrier phase measurement related information needs to be reported through pre-configuration (such as protocol agreement or configuration by the network side). In this case, the carrier phase measurement related information reported by the base station may include the carrier phase measurement values of the first carriers without including the identification information of the first carrier.

For another example, the carrier phase measurement related information reported by the base station also includes: the carrier phase measurement values of the first carriers and the identification information of the first carriers. In this way, the base station and the LMF can dynamically report the carrier phase measurement values of the N first carriers. In this way, a carrier phase measurement value of a carrier with the better performance can be selected for reporting, which is also beneficial to improving positioning accuracy.

For another example, the base station and the LMF may be aligned to determine which piece or pieces of carrier phase measurement related information needs to be reported through pre-configuration (such as protocol agreement or configuration by the network side). In this case, the carrier phase measurement related information reported by the base station may include: the carrier phase measurement value of the first carrier and at least one parameter corresponding to the first carrier, where the at least one parameter is used to indicate the correlation between the carrier phase measurement value of the first carrier and a carrier phase measurement value of a second carrier within an effective frequency-domain range where the first carrier is located.

The effective frequency-domain range may be pre-configured (for example, indicated by the network side or agreed by a protocol), or the effective frequency-domain range may also be dynamically indicated. For example, in a case where the effective frequency-domain range is pre-configured, a parameter may be used to indicate the correlation between the carrier phase measurement value of the first carrier and the carrier phase measurement value of the second carrier within the effective frequency-domain range where the first carrier is located. For another example, in a case where the effective frequency-domain range is dynamically indicated, one parameter may be used to indicate the effective frequency-domain range, and another parameter may be used to indicate the correlation between the carrier phase measurement value of the first carrier and the carrier phase measurement value of the second carrier within the effective frequency-domain range where the first carrier is located.

In the embodiment, the base station reports the carrier phase measurement values of the N first carriers and at least one parameter corresponding to each first carrier. The LMF entity side can obtain carrier phase measurement values of multiple second carriers associated with each first carrier, based on the carrier phase measurement values of the N first carriers and at least one parameter corresponding to each first carrier, thereby ensuring that the LMF entity side obtains carrier phase measurement values of more carriers while reducing reporting overhead, and contributing to improving the positioning accuracy.

For another example, the carrier phase measurement related information includes: carrier phase measurement values of the first carriers, identification information of the first carriers, and at least one parameter corresponding to the first carrier; where the at least one parameter is used to indicate a correlation between the carrier phase measurement value of the first carrier and a carrier phase measurement value of a second carrier within an effective frequency-domain range where the first carrier is located. In this way, the base station and the LMF can dynamically report the carrier phase measurement values of the N first carriers by reporting the identification information, and a carrier phase measurement value of a carrier with the better performance can be selected for reporting, which is also beneficial to improving positioning accuracy. Furthermore, the LMF entity side can obtain the carrier phase measurement values of multiple second carriers associated with multiple first carriers, based on the carrier phase measurement values of the N first carriers and at least one parameter corresponding to each of the first carriers, thereby ensuring that the LMF entity side obtains carrier phase measurement values of more carriers while reducing reporting overhead, and contributing to improving the positioning accuracy.

Optionally, the carrier phase measurement value includes at least one of the following:
a carrier phase measurement absolute value of the first carrier; or
a carrier phase measurement relative value of the first carrier and a reference carrier.

For example, for multiple carriers, carrier phase measurement values on various carriers may be measured individually, that is, carrier phase measurement absolute values of the first carrier and the reference carrier; it is also possible to measure a carrier phase measurement value of each carrier relative to the reference carrier, that is, the carrier phase measurement relative value. The carrier phase measurement relative value may be a difference between carrier phase measurement values of each carrier and the reference carrier, or a ratio of the carrier phase measurement value of each carrier to the carrier phase measurement value of the reference carrier. The embodiments of the present disclosure are not limited thereto.

The identification information includes but is not limited to at least one of the following: a carrier index, a center carrier frequency, or a carrier spacing.

For example, a bandwidth range corresponding to the center carrier frequency may include multiple carriers. The distance between adjacent carriers is carrier spacing (or referred to as subcarrier spacing), and each carrier corresponds to its own carrier index (or referred to as carrier number, carrier identity (Identity, ID), etc.). In this way, the base station reports identification information such as the carrier index, the center carrier frequency, and the carrier spacing to the LMF, to enable the LMF to know which carrier the received carrier phase measurement value belongs to. For example, a frequency corresponding to the carrier may be based on the carrier index, the carrier spacing and the center carrier frequency.

Optionally, the at least one parameter includes: a slope value, and/or a target value used to indicate the effective frequency-domain range, and the slope value is determined based on carrier phase measurement values of multiple carriers within the effective frequency-domain range.

For example, the slope value may be determined based on the carrier phase measurement values of multiple carriers within the effective frequency-domain range where each first carrier is located, and the slope value indicates the correlation between the carrier phase measurement value of the first carrier and the carrier phase measurement value of the second carrier within the effective frequency-domain range where the first carrier is located. Referring to FIG. 2, the horizontal axis represents the carrier index, and the vertical axis represents the carrier phase measurement value. For example, one effective frequency-domain range is from carrier 50 to carrier 150, and a straight line or a curve may be determined based on carrier phase measurement values of multiple carriers within carrier 50 to carrier 150. For example, carrier 110 is selected as the first carrier (that is, selecting a target carrier or a reference carrier). A correlation between carrier phase measurement values of other carriers from carrier 50 to carrier 150 and the carrier phase measurement value of the first carrier may be indicated based on the slope value of the straight line or the curve.

It should be noted that, in an embodiment of the present disclosure, the slope value may be used to indicate carrier phase measurement values of multiple carriers within the effective frequency-domain range of the first carrier, and a specific manner of determining the slope value is not limited in the embodiments of the disclosure.

Optionally, the carrier phase measurement related information further includes: reliability information of the carrier phase measurement values; the reliability information includes at least one of the following: indication information used to indicate line of sight or non line of sight, a spectrum peak slope of a first path, a Rician factor, a carrier-to-noise ratio, a signal-to-noise ratio, a reception/transmission timing error group (Rx/Tx TEG) of a TRP, an antenna phase center offset, a reported timestamp, a reference signal received power (RSRP), a first path RSRP, an additional path RSRP, a uplink time difference of arrival (UL-TDOA), or an uplink angle of arrival (UL-AOA).

Optionally, the reliability information may be used to indicate the reliability of the carrier phase measurement values. For example, the LMF side may select multiple carrier phase measurement values with the best performance based on the reliability information to perform position calculation, thereby improving positioning accuracy.

Optionally, the transmitting the carrier phase measurement related information of the N first carriers to the location management function (LMF) entity includes: transmitting, by the base station, carrier phase measurement related information of N first carriers in one carrier component or multiple carrier components to the LMF entity.

In the embodiment, when reporting the carrier phase measurement related information of multiple carriers to the LMF entity, the base station may support reporting the carrier phase measurement related information of the N first carriers in one carrier component to the LMF entity, and may also support reporting the carrier phase measurement related information of the N first carriers in multiple carrier components.

For example, when reporting the carrier phase measurement related information of the N first carriers in multiple carrier components, carrier phase measurement related information of the same number of first carriers may be reported for each carrier component. In this case, the number of carrier phase measurement values of first carriers in each carrier component may be pre-configured or dynamically indicated, or indicated in other manners, and the embodiments of the present disclosure are not limited thereto. Alternatively, carrier phase measurement related information of different numbers of first carriers may also be reported for different carrier components. Optionally, identification information of carrier components may be reported simultaneously for the reporting of multiple carrier components, to enable the LMF entity to learn in which carrier component the first carriers are reported by the base station.

One carrier component may include multiple carriers within a partial bandwidth range of a frequency-domain range corresponding to the center carrier.

Optionally, the transmitting the carrier phase measurement related information of the N first carriers to the location management function (LMF) entity includes: transmitting, by the base station, the carrier phase measurement related information of the N carriers on one symbol or multiple symbols to the LMF entity.

In the embodiment, when reporting carrier phase measurement related information of multiple carriers to the LMF entity, the base station may support reporting the carrier phase measurement related information of the N first carriers on one symbol to the LMF entity, and may also support reporting the carrier phase measurement related information of the N first carriers on multiple symbols.

For example, when reporting the carrier phase measurement related information of the N first carriers on multiple symbols, carrier phase measurement related information of the same number of first carriers may be reported for each symbol. In this case, the number of carrier phase measurement values of first carriers on each symbol may be pre-configured or dynamically indicated, or indicated in other manners, and the embodiments of the present disclosure are not limited thereto. Alternatively, carrier phase measurement related information of different numbers of first carriers may also be reported for different symbols. Optionally, identification information of symbols may be reported simultaneously for the reporting of multiple symbols, to enable the LMF entity to learn in which symbols the first carriers are reported by the base station.

Optionally, the transmitting the carrier phase measurement related information of the N first carriers to the location management function (LMF) entity includes:
periodically transmitting, by the base station, the carrier phase measurement related information of the N first carriers to the LMF entity; or,
transmitting, by the base station, the carrier phase measurement related information of the N first carriers to the LMF entity, when determining that a measurement reporting trigger condition is met.

The measurement reporting trigger condition may be based on positioning requirements, or may be that a parameter value of the reliability information (such as RSRP/SNR/CNR, etc.) reaches a first threshold. The first threshold may be agreed by a protocol or configured by the network side, etc. The embodiments of the application are not limited thereto.

In the above solution of the present disclosure, a scheme for transmitting information related to carrier signal measurement is provided for multi-carrier signals under the NR system, which solves a problem that there is no specific solution for carrier phase measurement reporting in the existing NR systems. This solution provides a variety of ways to report information related to carrier signal measurement, which can save signaling overhead and improve positioning accuracy. Moreover, the reliability information of the carrier phase measurement values is also reported, so that the LMF entity side can screen carrier phase measurement values with the higher reliability for position calculation processing based on the information, which contributes to improving the positioning accuracy.

The network device involved in the embodiments of the present application may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (Internet Protocol, IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (Base Transceiver Station, BTS) in the global system for mobile communications (Global System for Mobile communications, GSM) or code division multiple access (Code Division Multiple Access, CDMA), a NodeB in the wide-band code division multiple access (Wide-band Code Division Multiple Access, WCDMA), an evolved Node B (evolutional Node B, eNB or e-NodeB) in long term evolution (long term evolution, LTE) system, a 5G base station (gNB) in 5G network architecture (next generation system), a home evolved Node B (Home evolved Node B, HeNB), a relay node (relay node), a femto (femto), a pico (pico), or the like, which is not limited herein. In some network architectures, the network device may include a centralized unit (centralized unit, CU) node and a distributed unit (distributed unit, DU) node, which may be geographically separated.

As shown in FIG. 4, an embodiment of the present disclosure further provides a carrier phase positioning method, which includes the following steps.

Step 41: receiving, by an LMF entity, carrier phase measurement related information of N first carriers transmitted by a terminal or a base station; where N is a positive integer.

Step 42: performing, by the LMF entity, calculation processing on a position of the terminal based on the carrier phase measurement related information.

Optionally, the LMF entity may determine an optimal carrier phase measurement value from the carrier phase measurement values of the N first carriers based on the carrier phase measurement related information; and the LMF entity may perform calculation processing on the position of the terminal based on the optimal carrier phase measurement value(s), thereby ensuring positioning accuracy.

For example, the LMF entity may determine optimal carrier phase measurement value(s) from the carrier phase measurement values of the N first carriers based on the reliability information included in the carrier phase measurement related information.

For another example, in a case where the carrier phase measurement related information includes: a carrier phase measurement value of the first carrier and at least one parameter corresponding to the first carrier, the LMF entity may determine a carrier phase measurement value of a second carrier within an effective frequency-domain range where the first carrier is located, based on at least one parameter corresponding to the first carrier; may determine optimal carrier phase measurement value(s) from the carrier phase measurement values of the N first carriers and the carrier phase measurement values of the second carriers based on the carrier phase measurement related information (such as reliability information); and may perform calculation processing on the position of the terminal based on the optimal carrier phase measurement value(s), so as to improve positioning accuracy.

The information transmission method and the carrier phase positioning method of the present disclosure will be described below with reference to specific embodiments.

### Embodiment 1: (downlink UE-Assisted positioning scenario)

On the side of base station:
Step 1: a TRP transmits Tx TEG ID and an antenna phase center offset of the TRP to an LMF, and transmits PRSs in one carrier component (Carrier Component, CC) on one symbol (symbol).

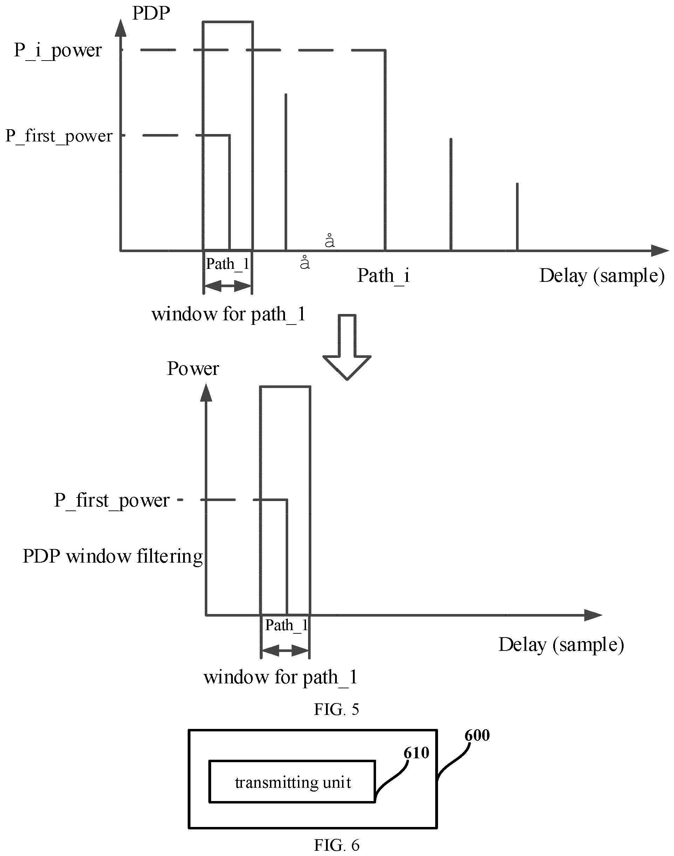

On the side of UE:
Step 1: receiving the PRSs.
Step 2: measuring channel impulse response (Channel Impulse Response, CIR) according to the received PRSs, and calculating a slope value Sp (the whole cycle needs to be compensated, for example, based on the phase function of Matlab) of a first path spectrum peak in the power delay profile (Power Delay Profile, PDP), performing a windowing operation on the CIR to select the CIR in the first path part, setting values of the remaining sampling points to zero, as shown in FIG. 5, and converting the processed CIR into a channel frequency response (Channel Frequency Response, CFR).

For example, carrier phase measurement related information of three carriers (or subcarriers) in one CC is reported; phases Phi1, Phi2 and Phi3 of subcarriers C1, C2 and C3 located in one CC are calculated; C1 is used as a reference subcarrier in CC1, phases of the remaining subcarriers C2 and C3 are divided by the phase of C1 to obtain Phi2/Phi1 and Phi3/Phi1; slope values S1, S2 and S3 are calculated by performing fitting on K+1 subcarriers, for example, ([C1 - (K - 1)/2: C1 + (K - 1)/2]) in the neighborhood of each of subcarriers C1, C2, and C3 in one CC on one symbol based on a slope effective length K (or referred to as the effective frequency domain range); and reliability information of the carrier phase measurement values is calculated.

Step 3: reporting, to the LMF in a period of 5ms, the phases Phi1, Phi2/Phi1, Phi3/Phi1 (in unit of cycle) of the three subcarriers C1, C2, and C3 in CC1 on one symbol, the slope values S1, S2, S3, subcarrier IDs, subcarrier spacings, a center carrier frequency, the slope effective length K, reference subcarrier ID, and the reliability information of the carrier phase measurement values.

The reliability information of the carrier phase measurement value includes: LOS/NLOS indication information (soft value or hard value), a slope value Sp of a first path spectrum peak, a Rician Factor, a carrier-to-noise ratio (Carrier Noise Ratio, CNR), a signal-to-noise ratio (Signal-to-noise ratio, SNR), a reported timestamp, a reference signal received power (RSRP), a first path RSRP, an additional path RSRP, a downlink reference signal time difference (DL-RSTD), DL-AOD, he TRP\UE antenna phase center offset, UE reception/transmission timing error group (TEG) related information (for example, TEG ID), which are calculated according to CIR\CFR in step 2, and correspond to the carrier phase measurement value.

On the side of LMF:
Step 1: the LMF receives reporting quantities reported by the UE and the base station (such as a TRP), and selects carrier phase measurement values based on the reliability information of the carrier phase measurement values. When using measurement values of the TRP measured by the UE, a carrier phase measurement value with the closest timestamp time needs to be selected, and the carrier phase measurement value in this case is more reliable. In addition, subsequent processing may be performed, for example, calculating a phase value of a frequency point of the reference subcarrier C1 in CC1, and a phase value of C2 is obtained as Phi2=Phi1*(Phi2/Phi1). For another example, phase values of subcarriers [C2 - K/2: C2 + K/2] may be calculated based on the phase value Phi2 and the slope value S2 of the subcarrier C2, for example, a phase corresponding to subcarrier C2+5 is mod (Phil * Phi2/Phi1 + 5 * S2,1). The phase values of appropriate subcarriers are selected, the Chinese Remainder Theorem (CRT) is used to estimate the whole cycle and recover a more accurate propagation delay, and then difference may be performed again on the carrier phase measurement value of a positioning reference unit (Positioning Reference Unit, PRU) (the PRU reports the carrier phase measurement value in the same way as steps 2 and 3) to obtain a double difference value of the carrier phase that eliminates a time offset and a frequency offset, which is used for subsequent position calculation.

### Embodiment 2: (downlink UE-Assisted positioning scenario)

On the side of base station:
Step 1: each of TRPi and TRPj transmits Tx TEG ID and a TRP antenna phase center offset to the LMF, and transmits PRSs in 2 CCs (such as CC1 and CC2) on 5 symbols.

On the side of UE:
Step 1: receiving the PRSs.
Step 2: measuring channel impulse response (CIR) according to the received PRSs, and calculating a slope value Sp (the whole cycle needs to be compensated, for example, based on the phase function of Matlab) of a first path spectrum peak in the power delay profile (PDP), performing a windowing operation on the CIR to select the CIR in the first path part, setting the remaining sampling points to zero (which are the same as in Embodiment 1), and converting the processed CIR into a channel frequency response (CFR).

For example, carrier phase measurement related information of three carriers (or subcarriers) in two CCs is reported, and phases Phi1, Phi2 and Phi3 of subcarriers C1, C2 and C3 located in CC1, and phases Phi1', Phi2', and Phi3' of subcarriers D1, D2 and D3 located in CC2 are calculated. Slope values S1, S2 and S3 are calculated by performing fitting on K+1 subcarriers, for example, ([C1 - (K - 1)/2: C1: C1 + (K - 1)/2]) in the neighborhood of each of subcarriers C1, C2, and C3 in CC1 on each symbol based on a slope effective length K; slope values S1', S2' and S3' are calculated by performing fitting on K+1 subcarriers, for example, ([D1 - (K - 1)/2: D1: D1 + (K - 1)/2]) in the neighborhood of each of subcarriers D1, D2, and D3 in CC2 on each symbol based on the slope effective length K; reliability information of the carrier phase measurement values is calculated.

Step 3: after triggering by the LMF, the phases Phi1, Phi2, Phi3, Phi1', Phi2', Phi3' of subcarriers C1, C2, C3 in CC1, and subcarriers D1, D2 and D3 in CC2 on 5 symbols (the phases are in unit of rad ranging from 0 to 2π, and the phase here may be phase values of two TRPs measured by the UE (i.e., reporting respective values separately)) may be reported to the LMF, or a difference between phase values of the two TRPs ((i.e., reporting a difference value between the target TRP and the reference TRP), such as a difference between a neighbor (neighbor) TRP and a reference (reference) TRP) may also be reported. Slope values S1, S2, S3, S1', S2', S3', the center carrier frequency in combination with subcarrier IDs of subcarrier frequency points/subcarrier IDs relative to the center carrier frequency (i.e., a frequency ratio, which may be quantified), and the slope effective length K and reliability information of the carrier phase measurement values may be reported.

The reliability information of the carrier phase measurement value includes: LOS/NLOS indication information, slope value of first path spectrum peak, Rician Factor, carrier-to-noise ratio (CNR), signal-to-noise ratio (SNR), reporting timestamp, reference signal received power (RSRP), first path RSRP, additional path RSRP, reference signal time difference (RSTD), DL-AOD, TRP\UE antenna phase center offset, UE reception/transmission timing error group (TEG) related information (for example, TEG ID), which correspond to the carrier phase measurement value and are calculated according to CIR\CFR in step 2.

On the side of LMF:
Step 1: the LMF receives reporting quantities reported by the UE and the base station (such as a TRP), and selects reliable carrier phase measurement values on each of 5 symbols based on the reliability information of the carrier phase measurement values. When using measurement values of the TRP measured by the UE, a carrier phase measurement value with the closest timestamp time needs to be selected, and the carrier phase measurement value in this case is more reliable. In addition, subsequent processing may be performed, for example, phase values of subcarriers [C1 - K/2:C1 + K/2] may be calculated based on the phase Phi1 and the slope value S1 of the subcarrier C1. For example, a phase corresponding to the carrier C1+5 is mod (Phil + 5 * S1, 2π). Then, carrier phase measurement values of 5 symbols are used, each symbol includes phase measurement values of multiple subcarriers (including reported subcarrier phases, and phases of neighbor subcarriers fitted by combining their respective slopes), carrier phase values are tracked by using the phase locked loop (PLL) and other multi-symbol continuous tracking technologies (single subcarrier tracking or parallel tracking, that is, one or more subcarriers are tracked simultaneously), and double difference is performed on the carrier phase measurement value of a positioning reference unit (PRU) (the PRU reports the carrier phase measurement value in the same way as steps 2 and 3) to obtain the carrier phase measurement value that eliminates a time offset and a frequency offset, which is input into a filtering algorithm such as Kalman filter for position calculation.

### Embodiment 3: (uplink BS-assisted positioning scenario)

On the side of UE:
Step 1: the UE transmits UE Tx TEG ID and a UE antenna phase center offset to an LMF, and transmits SRSs in 2 CCs (CC1, CC2) on 5 symbols.

On the side of base station:
Step 1: receiving SRSs.
Step 2: measuring channel impulse response (CIR) according to the received SRSs, and calculating a slope value Sp (the whole cycle needs to be compensated, for example, based on the phase function of Matlab) of a first path spectrum peak in the power delay profile (PDP), performing a windowing operation on the CIR to select the CIR in the first path part, setting the remaining sampling points to zero (which are the same as in Embodiment 1), and converting the processed CIR into a channel frequency response (CFR).

For example, carrier phase measurement related information of three carriers (or subcarriers) in one CC is reported, the multi-symbol continuous tracking technology such as phase locked loop (PLL) is used to track phase values of multiple carriers, to obtain phases Phi1_est, Phi2_est, Phi3_est, Phi1'_est, Phi2'_est, Phi3'_est of the tracked subcarriers C1, C2, C3 (located in CC1) and the tracked subcarriers D1, D2, D3 (located in CC2). Subcarriers C1 and D1 are used as reference subcarriers, and a difference of phases of the remaining subcarriers in CC1 and CC2 relative to the corresponding reference subcarrier phase are obtained, that is, Phi1_est, Phi2_est-Phi 1_est, Phi3_est-Phi1_est, Phi1'_est, Phi2'_est-Phi1'_est, Phi3 '_est-Phi1'_est. Further, slope values S1, S2 and S3 are calculated by performing fitting on K+1 subcarriers, for example, ([C1 - (K - 1)/2: C1: C1 + (K - 1)/2]) in the neighborhood of each of subcarriers C1, C2, and C3 in CC1 on each symbol based on a slope effective length K; slope values S1', S2' and S3' are calculated by performing fitting on K+1 subcarriers, for example, ([D1 - (K - 1)/2: D1 + (K - 1)/2]) in the neighborhood of each of subcarriers D1, D2, and D3 in CC2 on each symbol based on the slope effective length K; reliability information of the carrier phase measurement values is calculated; and carrier phase measurement values are selected in each symbol of 5 symbols.

Step 3: after triggering by the LMF, reporting to the LMF the following information: the phases hi1_est, Phi2_est-Phi1_est, Phi3_est-Phi1_est, Phi1'_est, Phi2'_est-Phi1'_est, Phi3'_est-Phi1'_est (in unit of rad) of subcarriers C1, C2, C3, D1, D2 and D3 on h symbols (5≥h≥1), slope values S1, S2, S3, S1', S2', S3', subcarrier IDs, BWP (Bandwidth Part) ID, a center frequency, a subcarrier spacing, reference subcarrier ID, a slope effective length K, and reliability information of carrier phase measurement values. The reliability information of carrier phase measurement value includes slope value of first path spectrum peak, Rician Factor, carrier-to-noise ratio (CNR), signal-to-noise ratio (SNR), timestamp, reference signal received power (RSRP), first path RSRP, additional path RSRP, UL-AOA, TRP\UE antenna phase center offset, TRP reception/transmission timing error group (TEG) related information, which are corresponding to the carrier phase measurement value and calculated according to CIR\CFR in step 2.

On the side of LMF:
Step 1: the LMF receives reporting quantities reported by the UE and the base station, and selects carrier phase measurement values whose indication information is LOS, the slope value Sp of the first path spectrum peak is larger, the RSRP value is higher, the TEG ID is matched, the signal-to-noise ratio and carrier-to-noise ratio are higher. In addition, when using TRPi (i=1-3) to obtain measurement values of the UE, the carrier phase measurement value with the closest timestamp time needs to be selected, and the carrier phase measurement value in this case is more reliable, and can be used for subsequent processing. For example, a phase value of a frequency point of the reference subcarrier C1 in CC1 is calculated, a phase value of C2 is obtained based on Phi2_est = Phi1_est * (Phi2_est/Phi1_est). For another example, phase values of subcarriers [C1 - K/2: C1 + K/2] may be calculated based on the phase Phi1_est and the slope value S1 of the subcarrier C1, for example, a phase corresponding to subcarrier C1+5 is Phi1_est + Phi1 + 5 * S1. The phase values of appropriate subcarriers are selected, the Chinese Remainder Theorem (CRT) is used to estimate the whole cycle and recover a more accurate propagation delay, and then double difference may be performed again on the carrier phase measurement value of a positioning reference unit (PRU) (the PRU reports the carrier phase measurement value in the same way as steps 2 and 3) to obtain the carrier phase measurement value that eliminates a time offset and a frequency offset, which is input into a filtering algorithm such as Extended Kalman Filter (Extended Kalman Filter, EKF) for position calculation.

### Embodiment 4: (downlink UE-Assisted positioning scenario)

On the side of base station:
Step 1: a TRP transmits Tx TEG ID and TRP antenna phase center offset to an LMF, and transmits PRSs in one CC on one symbol.

On the side of UE:
Step 1: receiving PRSs.
Step 2: measuring channel impulse response (CIR) according to the received PRSs, and calculating a slope value Sp (the whole cycle needs to be compensated, for example, based on the phase function of Matlab) of a first path spectrum peak in the power delay profile (PDP), performing a windowing operation on the CIR to select the CIR in the first path part, setting the remaining sampling points to zero (as shown in FIG. 5), and converting the processed CIR into a channel frequency response (CFR).

For example, carrier phase measurement related information of three carriers (or subcarriers) in one CC is reported, phases Phi1, Phi2/Phi1 and Phi3/Phi1 of subcarriers C1, C2 and C3 located in one CC are calculated; slope values S1, S2 and S3 are calculated by performing fitting on K+1 subcarriers, for example, ([C1 - (K - 1)/2: C1 + (K - 1)/2]) in the neighborhood of each of subcarriers C1, C2, and C3 in one CC on one symbol based on a slope effective length K; and reliability information of the carrier phase measurement values is calculated.

Step 3: under the trigger by the UE, reporting the following information to the LMF: differential phases between neighbor TRPs and a reference TRP of subcarriers C1, C2, and C3 on one symbol or differential phases (in unit of cycle) between different receiver antennas, slope values S1, S2, S3, subcarrier IDs, a center frequency, a slope effective length K, reference subcarrier ID, and reliability information of carrier phase measurement values. The reliability information of the carrier phase measurement value includes: LOS/NLOS indication information, first path spectrum peak slope, Rician factor, carrier-to-noise ratio (CNR), signal-to-noise ratio (SNR), timestamp, reference signal received power (RSRP), first path RSRP, additional path RSRP, RSTD, DL-AOD, TRP\UE antenna phase center offset, UE timing error group (TEG), which are corresponding to the carrier phase measurement value and calculated according to CIR\CFR in step 2.

On the side of LMF:
Step 1: the LMF receives reporting quantities reported by the UE and the TRP, and selects carrier phase measurement values based on the reliability information of the carrier phase measurement values. When measurement values of TRPs are obtained by the UE, the carrier phase measurement value with the closest timestamp time needs to be selected, and the carrier phase measurement value in this case is more reliable. In addition, subsequent processing may be performed, phase values of subcarriers [C2 - K/2: C2 + K/2] may be calculated based on the phase Phi1 and the slope value S1 of the subcarrier C1, for example, a phase corresponding to subcarrier C1+5 is (Phil * Phi2/ Phi1 + 5 * S1,1). The phase values of appropriate subcarriers are selected, the Chinese Remainder Theorem (CRT) is used to estimate the whole cycle and recover a more accurate propagation delay, and then double difference may be performed on the carrier phase measurement value of a positioning reference unit (PRU) (the PRU reports the carrier phase measurement value in the same way as steps 2 and 3) to obtain a carrier phase double difference value that eliminates time and frequency offsets, which can be used for subsequent position calculation.

The information transmission method and the carrier phase positioning method of the present disclosure are introduced in the above embodiments. The apparatuses corresponding to the above methods will be described below with reference to the accompanying drawings.

As shown in FIG. 6, an embodiment of the present disclosure provides an information transmission apparatus 600. Optionally, the information transmission apparatus 600 may be applied to a terminal. The apparatus 600 includes: a transmitting unit 610, configured to perform carrier phase measurement according to a first signal, and transmit carrier phase measurement related information of N first carriers to a location management function (LMF) entity, where N is a positive integer.

Optionally, the carrier phase measurement related information includes at least one of the following: carrier phase measurement values of the first carriers; identification information of the first carriers; or at least one parameter corresponding to each first carrier, where the at least one parameter is used to indicate a correlation between the carrier phase measurement value of the first carrier and a carrier phase measurement value of a second carrier within an effective frequency-domain range where the first carrier is located.

Optionally, the at least one parameter includes: a slope value, and/or a target value used to indicate the effective frequency-domain range; the slope value is determined by carrier phase measurement values of a plurality of carriers within the effective frequency-domain range.

Optionally, the identification information includes at least one of the following: carrier index, center carrier frequency, or carrier spacing.

Optionally, the carrier phase measurement value includes at least one of the following:
a carrier phase measurement absolute value of the first carrier;
a carrier phase measurement relative value of the first carrier and a reference carrier; or
a carrier phase measurement relative value of a target base station and a reference base station on the first carrier.

Optionally, the carrier phase measurement related information further includes: reliability information of the carrier phase measurement values; where the reliability information includes at least one of the following: indication information used to indicate line of sight or non line of sight, a spectrum peak slope of a first path, a Rician factor, a carrier-to-noise ratio, a signal-to-noise ratio, a reception/transmission timing error group (Rx/Tx TEG) of the terminal, an antenna phase center offset, a timestamp, a reference signal received power (RSRP), a first path RSRP, an additional path RSRP, a downlink reference signal time difference (DL-RSTD), or a downlink angle of departure (DL-AOD).

Optionally, the transmitting unit 610 is further configured to transmit the carrier phase measurement related information of the N first carriers in one or more carrier components to the LMF entity.

Optionally, the transmitting unit 610 is further configured to transmit the carrier phase measurement related information of the N carriers on one or more symbols to the LMF entity.

Optionally, the transmitting unit 610 is further configured to:
periodically transmit the carrier phase measurement related information of the N first carriers to the LMF entity; or,
transmit the carrier phase measurement related information of the N first carriers to the LMF entity, when determining that a measurement reporting trigger condition is met.

Optionally, the first signal is a positioning reference signal (PRS) transmitted by a base station.

It should be noted that the above apparatus provided in the embodiment of the present disclosure can implement all method steps implemented in the above method embodiments at the terminal side, and can achieve the same technical effects. Therefore, the descriptions and beneficial effects of this embedment that are the same as the method embodiments will not be described here in detail.

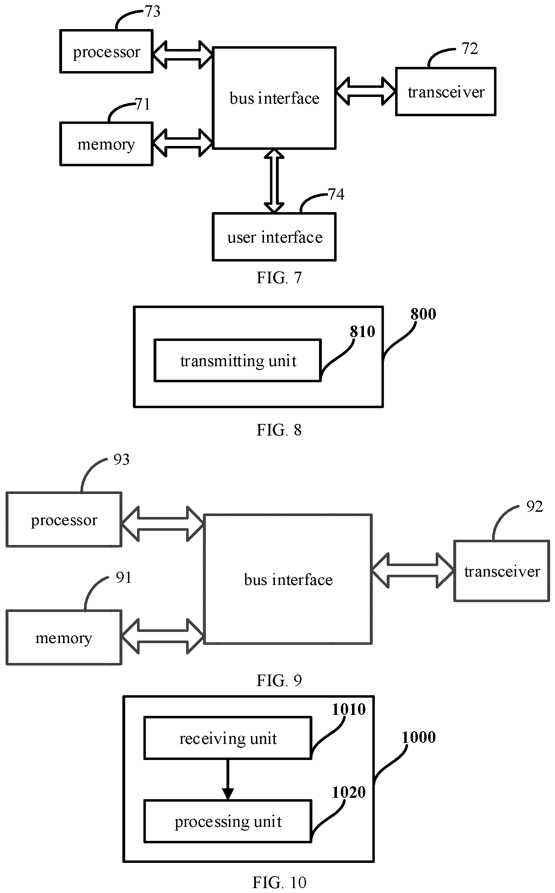

As shown in FIG. 7, an embodiment provides an information transmission apparatus, including a memory 71, a transceiver 72, and a processor 73. The memory 71 is configured to store a computer program; the transceiver 72 is configured to transmit and receive data under the control of the processor 73, for example, the transceiver 72 is configured to receive and transmit data under the control of the processor 73; the processor 73 is configured to read the computer program in the memory 71 to perform the following operations:
performing carrier phase measurement according to a second signal, and transmitting carrier phase measurement related information of N first carriers to a location management function (LMF) entity, where N is a positive integer.

Optionally, the carrier phase measurement related information includes at least one of the following: carrier phase measurement values of the first carriers; identification information of the first carriers; or at least one parameter corresponding to each first carrier, where the at least one parameter is used to indicate a correlation between the carrier phase measurement value of the first carrier and a carrier phase measurement value of a second carrier within an effective frequency-domain range where the first carrier is located.

Optionally, the at least one parameter includes: a slope value, and/or a target value used to indicate the effective frequency-domain range; the slope value is determined by carrier phase measurement values of a plurality of carriers within the effective frequency-domain range.

Optionally, the identification information includes at least one of the following: carrier index, center carrier frequency, or carrier spacing.

Optionally, the carrier phase measurement value includes at least one of the following:
a carrier phase measurement absolute value of the first carrier;
a carrier phase measurement relative value of the first carrier and a reference carrier; or
a carrier phase measurement relative value of a target base station and a reference base station on the first carrier.

Optionally, the carrier phase measurement related information further includes: reliability information of the carrier phase measurement values; where the reliability information includes at least one of the following: indication information used to indicate line of sight or non line of sight, a spectrum peak slope of a first path, a Rician factor, a carrier-to-noise ratio, a signal-to-noise ratio, a reception/transmission timing error group (Rx/Tx TEG) of the terminal, an antenna phase center offset, a timestamp, a reference signal received power (RSRP), a first path RSRP, an additional path RSRP, a downlink reference signal time difference (DL-RSTD), or a downlink angle of departure (DL-AOD).

Optionally, the processor 73 is configured to read the computer program in the memory 71 to perform the following operations: transmitting, by the terminal, the carrier phase measurement related information of the N first carriers in one or more carrier components to the LMF entity.

Optionally, the processor 73 is configured to read the computer program in the memory 71 to perform the following operations: transmitting, by the terminal, the carrier phase measurement related information of the N carriers on one or more symbols to the LMF entity.

Optionally, the processor 73 is configured to read the computer program in the memory 71 to perform the following operations:
periodically transmitting, by the terminal, the carrier phase measurement related information of the N first carriers to the LMF entity; or,
transmitting, by the terminal, the carrier phase measurement related information of the N first carriers to the LMF entity, when determining that a measurement reporting trigger condition is met.

Optionally, the first signal is a positioning reference signal (PRS) transmitted by a base station.

In FIG. 7, the bus architecture may include any number of interconnected buses and bridges. Specifically, various circuits of one or more processors represented by the processor 73 and a memory represented by the memory 71 are linked together. The bus architecture may also link various other circuits such as peripheral devices, voltage regulators, power management circuits, etc., which are well-known in the art, and therefore, no further descriptions are provided herein. The bus interface provides an interface. The transceiver 72 may be a plurality of elements, that is, include a transmitter and a receiver, and provide a unit for communicating with various other devices on a transmission medium. For different user equipment, the user interface 74 may also be an interface capable of externally or internally connecting to required equipment. The connected equipment includes but not limited to a keypad, a display, a speaker, a microphone, a joystick, and the like.

The processor 73 is responsible for managing the bus architecture and general processing, and the memory 71 may store data used by the processor 73 when performing operations.

Optionally, the processor 73 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The processor is configured to execute any of the methods provided by the embodiments of the present application according to the obtained executable instructions by calling the computer program stored in the memory. The processor and memory may also be physically separated.

It should be noted that the above apparatus provided in the embodiment of the present disclosure can implement all method steps implemented in the above method embodiments at the terminal side, and can achieve the same technical effects. Therefore, the description and the beneficial effect of this embedment that are the same as the method embodiments will not be introduced here in detail.

An embodiment of the present disclosure further provides a processor readable storage medium. The processor readable storage medium stores a computer program, and the computer program is configured to enable a processor to execute all method steps implemented in the above method embodiments at the terminal side, and the same technical effects can be achieved. Therefore, the description and the beneficial effect of this embedment that are the same as the method embodiments will not be introduced here in detail.

The processor readable storage medium may be any available medium or data storage device that can be accessed by the processor, including but not limited to magnetic storage (such as floppy disk, hard disk, magnetic tape, magneto-optical disk (Magneto-Optical, MO)), optical storage (such as compact disc (Compact Disk, CD), digital versatile disc (Digital Versatile Disc, DVD), blue-ray disc (Blu-ray Disc, BD), high-definition versatile disc (High-Definition Versatile Disc, HVD)), and semiconductor memory (such as ROM, erasable programmable read-only memory (Erasable Programmable Read-Only Memory, EPROM), electrically erasable programmable read-only memory (Electrically Erasable Programmable Read-Only Memory, EEPROM), non-volatile memory (NAND FLASH), solid-state drive (SSD)), etc.

As shown in FIG. 8, an embodiment of the present disclosure further provides an information transmission apparatus 800. Optionally, the information transmission apparatus 800 may be applied to a base station. The apparatus 800 includes: a transmitting unit 810, configured to perform carrier phase measurement according to a first signal, and transmit carrier phase measurement related information of N first carriers to a location management function (LMF) entity, where N is a positive integer.

Optionally, the carrier phase measurement related information includes at least one of the following: carrier phase measurement values of the first carriers; identification information of the first carriers; or at least one parameter corresponding to the first carrier, where the at least one parameter is used to indicate a correlation between the carrier phase measurement value of the first carrier and a carrier phase measurement value of a second carrier within an effective frequency-domain range where the first carrier is located.

Optionally, the at least one parameter includes: a slope value, and/or a target value used to indicate the effective frequency-domain range, and the slope value is determined by carrier phase measurement values of a plurality of carriers within the effective frequency-domain range.

Optionally, the identification information includes at least one of the following: carrier index, center carrier frequency, or carrier spacing.

Optionally, the carrier phase measurement value includes at least one of the following:
a carrier phase measurement absolute value of the first carrier; or
a carrier phase measurement relative value of the first carrier and a reference carrier.

Optionally, the carrier phase measurement related information further includes: reliability information of the carrier phase measurement values; where the reliability information includes at least one of the following: indication information used to indicate line of sight or non line of sight, a spectrum peak slope of a first path, a Rician factor, a carrier-to-noise ratio, a signal-to-noise ratio, a reception/transmission timing error group (Rx/Tx TEG) of a TRP, an antenna phase center offset, a reported timestamp, a reference signal received power (RSRP), a first path RSRP, an additional path RSRP, a uplink time difference of arrival (UL-TDOA), or an uplink angle of arrival (UL-AOA).

Optionally, the transmitting unit 810 is further configured to transmit the carrier phase measurement related information of the N first carriers in one or more carrier components to the LMF entity.

Optionally, the transmitting unit 810 is further configured to transmit the carrier phase measurement related information of the N carriers on one or more symbols to the LMF entity.

Optionally, the transmitting unit 810 is further configured to:
periodically transmit the carrier phase measurement related information of the N first carriers to the LMF entity; or,
transmit the carrier phase measurement related information of the N first carriers to the LMF entity, when determining that a measurement reporting trigger condition is met.

Optionally, the second signal is a sounding reference signal (SRS) transmitted by the terminal.

It should be noted that the above apparatus provided in the embodiment of the present disclosure can implement all method steps implemented in the above method embodiments at the side of the base station, and can achieve the same technical effects. Therefore, the description and beneficial effect of this embedment that are the same as the method embodiments will not be described here in detail.

In order to better achieve the above objective, as shown in FIG. 9, an information transmission apparatus is provided, including a memory 91, a transceiver 92, and a processor 93. The memory 91 is configured to store a computer program; the transceiver 92 is configured to transmit and receive data under the control of the processor 93, for example, the transceiver 92 is configured to receive and transmit data under the control of the processor 93; the processor 93 is configured to read the computer program in the memory 91 to perform the following operations:
performing carrier phase measurement according to a first signal, and transmitting carrier phase measurement related information of N first carriers to a location management function (LMF) entity, where N is a positive integer.

Optionally, the carrier phase measurement related information includes at least one of the following: carrier phase measurement values of the first carriers; identification information of the first carriers; or at least one parameter corresponding to the first carrier, where the at least one parameter is used to indicate a correlation between the carrier phase measurement value of the first carrier and a carrier phase measurement value of a second carrier within an effective frequency-domain range where the first carrier is located.

Optionally, the at least one parameter includes: a slope value, and/or a target value used to indicate the effective frequency-domain range, and the slope value is determined by carrier phase measurement values of a plurality of carriers within the effective frequency-domain range.

Optionally, the identification information includes at least one of the following: carrier index, center carrier frequency, or carrier spacing.

Optionally, the carrier phase measurement value includes at least one of the following:
a carrier phase measurement absolute value of the first carrier; or
a carrier phase measurement relative value of the first carrier and a reference carrier.

Optionally, the carrier phase measurement related information further includes: reliability information of the carrier phase measurement values; the reliability information includes at least one of the following: indication information used to indicate line of sight or non line of sight, a spectrum peak slope of a first path, a Rician factor, a carrier-to-noise ratio, a signal-to-noise ratio, a reception/transmission timing error group (Rx/Tx TEG) of a TRP, an antenna phase center offset, a reported timestamp, a reference signal received power (RSRP), a first path RSRP, an additional path RSRP, a uplink time difference of arrival (UL-TDOA), or an uplink angle of arrival (UL-AOA).

Optionally, the processor 93 is configured to read the computer program in the memory 91 to perform the following operations: transmitting the carrier phase measurement related information of the N first carriers in one or more carrier components to the LMF entity.

Optionally, the processor 93 is configured to read the computer program in the memory 91 to perform the following operations: transmitting the carrier phase measurement related information of the N carriers on one or more symbols to the LMF entity.

Optionally, the processor 93 is configured to read the computer program in the memory 91 to perform the following operations:
periodically transmitting the carrier phase measurement related information of the N first carriers to the LMF entity; or,
transmitting the carrier phase measurement related information of the N first carriers to the LMF entity, when determining that a measurement reporting trigger condition is met.

Optionally, the second signal is a sounding reference signal (SRS) transmitted by the terminal.

In FIG. 9, the bus architecture may include any number of interconnected buses and bridges, specifically one or more processors represented by processor 93 and various circuits of the memory represented by memory 91 are linked together. The bus architecture can also link together various other circuits such as peripherals, voltage regulators, and power management circuits, which are all well known in the art and therefore will not be further described herein. The bus interface provides an interface. The transceiver 92 may be a plurality of elements, including a transmitter and a receiver, providing a unit for communicating with various other devices over transmission media, including wireless channels, wired channels, optical cables, and other transmission media. The processor 93 is responsible for managing the bus architecture and general processing, and the memory 91 may store data used by the processor 93 when performing operations.

The processor 93 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

It should be noted that the above apparatus provided in the embodiment of the present disclosure can implement all method steps implemented in the above method embodiments at the side of the base station, and can achieve the same technical effects. Therefore, the descriptions and beneficial effects of this embedment that are the same as the method embodiments will not be described here in detail.

An embodiment of the present disclosure further provide a processor readable storage medium. The processor readable storage medium stores a computer program. The computer program is configured to cause a processor to execute all the method steps implemented by the above method embodiments on the side of the base station, and the same technical effects can be achieved. Therefore, the description and beneficial effect of this embedment that are the same as the method embodiments will not be described here in detail.

The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

As shown in FIG. 10, an embodiment of the present disclosure provides a carrier phase positioning apparatus 1000. Optionally, the carrier phase positioning apparatus 1000 may be applied to an LMF entity. The apparatus 1000 includes:
a receiving unit 1010, configured to receive carrier phase measurement related information of N first carriers transmitted by a terminal or a base station; where N is a positive integer; and
a processing unit 1020, configured to perform calculation processing on a position of the terminal based on the carrier phase measurement related information.

Optionally, in a case where the carrier phase measurement related information includes carrier phase measurement values of first carriers and at least one parameter corresponding to the first carrier, the processing unit 1020 is further configured to:
determine a carrier phase measurement value of a second carrier within an effective frequency-domain range where the first carrier is located, based on the at least one parameter corresponding to the first carrier and the carrier phase measurement values of the first carriers;
determine an optimal carrier phase measurement value from the carrier phase measurement values of the N first carriers and the carrier phase measurement values of the second carriers based on the carrier phase measurement related information; and
perform calculation processing on a position of the terminal based on the optimal carrier phase measurement value.

It should be noted that the above apparatus provided in the embodiment of the present disclosure can implement all method steps implemented in the above method embodiments at the side of LMF, and can achieve the same technical effects. Therefore, the descriptions and beneficial effects of this embedment that are the same as the method embodiments will not be described here in detail.

In order to better achieve the above objective, an information transmission apparatus is provided according to an embodiment of the present disclosure, which includes a memory, a transceiver, and a processor. The memory is configured to store a computer program; the transceiver is configured to transmit and receive data under the control of the processor, for example, the transceiver is configured to transmit and receive data under the control of the processor; the processor is configured to read the computer program in the memory to perform the following operations:
receiving carrier phase measurement related information of N first carriers transmitted by a terminal or a base station; where N is a positive integer; and
performing calculation processing on a position of the terminal based on the carrier phase measurement related information.

Optionally, in a case where the carrier phase measurement related information includes carrier phase measurement values of first carriers and at least one parameter corresponding to the first carrier, the processor is configured to read the computer program in the memory to perform the following operations:
determining a carrier phase measurement value of a second carrier within an effective frequency-domain range where the first carrier is located, based on the at least one parameter corresponding to the first carrier and the carrier phase measurement values of the first carriers;
determining an optimal carrier phase measurement value from the carrier phase measurement values of the N first carriers and the carrier phase measurement values of the second carriers based on the carrier phase measurement related information; and
performing calculation processing on a position of the terminal based on the optimal carrier phase measurement value.

The bus architecture may include any number of interconnected buses and bridges, specifically one or more processors represented by processor and various circuits of the memory represented by memory are linked together. The bus architecture can also link together various other circuits such as peripherals, voltage regulators, and power management circuits, which are all well known in the art and therefore will not be further described herein. The bus interface provides an interface. The transceiver may be a plurality of elements, including a transmitter and a receiver, providing a unit for communicating with various other devices over transmission media, including wireless channels, wired channels, optical cables, and other transmission media. The processor is responsible for managing the bus architecture and general processing, and the memory may store data used by the processor when performing operations.

The processor may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

It should be noted that the above apparatus provided in the embodiment of the present disclosure can implement all method steps implemented in the above method embodiments at the side of the LMF, and can achieve the same technical effects. Therefore, the descriptions and beneficial effects of this embedment that are the same as the method embodiments will not be described here in detail.

An embodiment of the present disclosure further provides a processor readable storage medium. The processor readable storage medium stores a computer program, and the computer program is configured to enable a processor to execute all method steps implemented in the above method embodiments at the side of the LMF, and the same technical effects can be achieved. Therefore, the description and the beneficial effect of this embedment that are the same as the method embodiments will not be introduced here in detail.

The processor readable storage medium may be any available medium or data storage device that can be accessed by the processor, including but not limited to magnetic storage (such as floppy disk, hard disk, magnetic tape, magneto-optical disk (MO)), optical storage (such as CD, DVD, BD, HVD, etc.), and semiconductor memories (such as ROM, EPROM, EEPROM, non-volatile memory (NAND FLASH), solid state drive (SSD)), etc.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor (processor) to execute part or all of the steps of the methods described in the various embodiments of the present disclosure. The aforementioned storage media include: universal serial bus (USB) flash drive, removable hard disk, read-only memory (Read-Only Memory, ROM), random access memory (Random Access Memory, RAM), magnetic disk, optical disc or other media that can store program codes.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

Furthermore, it is noted that in the apparatuses and methods of the present disclosure, it is apparent that components or steps may be decomposed and/or recombined. These decompositions and/or recombinations should be regarded as equivalent embodiments of the present disclosure. Moreover, the steps for performing the series of processing described above may naturally be performed chronologically in the order illustrated, but they need not necessarily be performed chronologically, and certain steps may be performed in parallel or independently of each other. It will be appreciated by those of ordinary skill in the art that all or any of the steps or components of the methods and apparatuses of the present disclosure can be implemented in hardware, firmware, software, or combinations thereof, in any computing device (including a processor, a storage medium, etc.) or a network of computing devices, which may be accomplished by those of ordinary skill in the art by applying their basic programming skills would be able to accomplish.

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. An information transmission method, comprising:
performing, by a terminal, carrier phase measurement according to a first signal, and transmitting carrier phase measurement related information of N first carriers to a location management function (LMF) entity, wherein N is a positive integer.

2. The information transmission method according to claim 1, wherein the carrier phase measurement related information comprises at least one of the following:
carrier phase measurement values of the first carriers;
identification information of the first carriers; or
at least one parameter corresponding to the first carrier,
wherein the at least one parameter is used to indicate a correlation between the carrier phase measurement value of the first carrier and a carrier phase measurement value of a second carrier within an effective frequency-domain range where the first carrier is located.

3. The information transmission method according to claim 2, wherein the at least one parameter comprises: a slope value, and/or a target value used to indicate the effective frequency-domain range, and
wherein the slope value is determined by carrier phase measurement values of a plurality of carriers within the effective frequency-domain range.

4. The information transmission method according to claim 2, wherein the identification information comprises at least one of the following:
a carrier index;
a center carrier frequency; or
a carrier spacing.

5. The information transmission method according to any one of claims 2 to 4, wherein the carrier phase measurement value comprises at least one of the following:
a carrier phase measurement absolute value of the first carrier;
a carrier phase measurement relative value of the first carrier and a reference carri er; or
a carrier phase measurement relative value of a target base station and a reference base station on the first carrier.

6. The information transmission method according to any one of claims 2 to 4, wherein the carrier phase measurement related information further comprises: reliability information of the carrier phase measurement values;
wherein the reliability information comprises at least one of the following:
indication information used to indicate line of sight or non line of sight, a spectrum peak slope of a first path, a Rician factor, a carrier-to-noise ratio, a signal-to-noise ratio, a reception/transmission timing error group (Rx/Tx TEG) of the terminal, an antenna phase center offset, a timestamp, a reference signal received power (RSRP), a first path RSRP, an additional path RSRP, a downlink reference signal time difference (DL-RSTD), or a downlink angle of departure (DL-AOD).

7. The information transmission method according to any one of claims 1 to 4, wherein the transmitting the carrier phase measurement related information of the N first carriers to the location management function (LMF) entity comprises:
transmitting, by the terminal, the carrier phase measurement related information of the N first carriers in one or more carrier components to the LMF entity.

8. The information transmission method according to any one of claims 1 to 4, wherein the transmitting the carrier phase measurement related information of the N first carriers to the location management function (LMF) entity comprises:
transmitting, by the terminal, the carrier phase measurement related information of the N carriers on one or more symbols to the LMF entity.

9. The information transmission method according to any one of claims 1 to 4, wherein the transmitting the carrier phase measurement related information of the N first carriers to the location management function (LMF) entity comprises:
periodically transmitting, by the terminal, the carrier phase measurement related information of the N first carriers to the LMF entity; or,
transmitting, by the terminal, the carrier phase measurement related information of the N first carriers to the LMF entity, when determining that a measurement reporting trigger condition is met.

10. The information transmission method according to any one of claims 1 to 4, wherein the first signal is a positioning reference signal (PRS) transmitted by a base station.

11. An information transmission method, comprising:
performing, by a base station, carrier phase measurement according to a second signal, and transmitting carrier phase measurement related information of N first carriers to a location management function (LMF) entity, wherein N is a positive integer.

12. The information transmission method according to claim 11, wherein the carrier phase measurement related information comprises at least one of the following:
carrier phase measurement values of the first carriers;
identification information of the first carriers; or
at least one parameter corresponding to the first carrier,
wherein the at least one parameter is used to indicate a correlation between the carrier phase measurement value of the first carrier and a carrier phase measurement value of a second carrier within an effective frequency-domain range where the first carrier is located.

13. The information transmission method according to claim 12, wherein the at least one parameter comprises: a slope value, and/or a target value used to indicate the effective frequency-domain range, and
wherein the slope value is determined by carrier phase measurement values of a plurality of carriers within the effective frequency-domain range.

14. The information transmission method according to claim 12, wherein the identification information comprises at least one of the following:
a carrier index;
a center carrier frequency; or
a carrier spacing.

15. The information transmission method according to any one of claims 12 to 14, wherein the carrier phase measurement value comprises at least one of the following:
a carrier phase measurement absolute value of the first carrier; or
a carrier phase measurement relative value of the first carrier and a reference carri er.

16. The information transmission method according to any one of claims 12 to 14, wherein the carrier phase measurement related information further comprises: reliability information of the carrier phase measurement values;
wherein the reliability information comprises at least one of the following:
indication information used to indicate line of sight or non line of sight, a spectrum peak slope of a first path, a Rician factor, a carrier-to-noise ratio, a signal-to-noise ratio, a reception/transmission timing error group (Rx/Tx TEG) of a TRP, an antenna phase center offset, a reported timestamp, a reference signal received power (RSRP), a first path RSRP, an additional path RSRP, a uplink time difference of arrival (UL-TDOA), or an uplink angle of arrival (UL-AOA).

17. The information transmission method according to any one of claims 11 to 14, wherein the transmitting the carrier phase measurement related information of the N first carriers to the location management function (LMF) entity comprises:
transmitting, by the base station, the carrier phase measurement related information of the N first carriers in one or more carrier components to the LMF entity.

18. The information transmission method according to any one of claims 11 to 14, wherein the transmitting the carrier phase measurement related information of the N first carriers to the location management function (LMF) entity comprises:
transmitting, by the base station, the carrier phase measurement related information of the N carriers on one or more symbols to the LMF entity.

19. The information transmission method according to any one of claims 11 to 14, wherein the transmitting the carrier phase measurement related information of the N first carriers to the location management function (LMF) entity comprises:
periodically transmitting, by the base station, the carrier phase measurement related information of the N first carriers to the LMF entity; or,
transmitting, by the base station, the carrier phase measurement related information of the N first carriers to the LMF entity, when determining that a measurement reporting trigger condition is met.

20. The information transmission method according to any one of claims 11 to 14, wherein the second signal is a sounding reference signal (SRS) transmitted by a terminal.

21. A carrier phase positioning method, comprising:
receiving, by a location management function (LMF) entity, carrier phase measurement related information of N first carriers transmitted by a terminal or a base station; wherein N is a positive integer; and
performing, by the LMF entity, calculation processing on a position of the terminal based on the carrier phase measurement related information.

22. The carrier phase positioning method according to claim 21, wherein in a case where the carrier phase measurement related information comprises carrier phase measurement values of first carriers and at least one parameter corresponding to the first carrier, the performing, by the LMF entity, calculation processing on the position of the terminal based on the carrier phase measurement related information comprises:
determining, by the LMF entity, a carrier phase measurement value of a second carrier within an effective frequency-domain range where the first carrier is located, based on the at least one parameter corresponding to the first carrier and the carrier phase measurement values of the first carriers;
determining, by the LMF entity, an optimal carrier phase measurement value from the carrier phase measurement values of the N first carriers and the carrier phase measurement values of the second carriers based on the carrier phase measurement related information; and
performing, by the LMF entity, calculation processing on the position of the terminal based on the optimal carrier phase measurement value.

23. An information transmission apparatus, comprising a memory, a transceiver, and a processor,
wherein the memory is configured to store a computer program; the transceiver is configured to transmit and receive data under the control of the processor; the processor is configured to read the computer program in the memory to perform the following operations:
performing carrier phase measurement according to a first signal, and transmitting carrier phase measurement related information of N first carriers to a location management function (LMF) entity, wherein N is a positive integer.

24. The information transmission apparatus according to claim 23, wherein the carrier phase measurement related information comprises at least one of the following:
carrier phase measurement values of the first carriers;
identification information of the first carriers; or
at least one parameter corresponding to the first carrier,
wherein the at least one parameter is used to indicate a correlation between the carrier phase measurement value of the first carrier and a carrier phase measurement value of a second carrier within an effective frequency-domain range where the first carrier is located.

25. The information transmission apparatus according to claim 24, wherein the carrier phase measurement related information further comprises: reliability information of the carrier phase measurement values;
wherein the reliability information comprises at least one of the following:
indication information used to indicate line of sight or non line of sight, a spectrum peak slope of a first path, a Rician factor, a carrier-to-noise ratio, a signal-to-noise ratio, a reception/transmission timing error group (Rx/Tx TEG) of a terminal, antenna phase center offset, a timestamp, a reference signal received power (RSRP), a first path RSRP, an additional path RSRP, a downlink reference signal time difference (DL-RSTD), or a downlink angle of departure (DL-AOD).

26. The information transmission apparatus according to claim 23 or 24, wherein the processor is configured to read the computer program in the memory to perform the following operations:
transmitting the carrier phase measurement related information of the N first carriers in one or more carrier components to the LMF entity.

27. The information transmission apparatus according to claim 23 or 24, wherein the processor is configured to read the computer program in the memory to perform the following operations:
transmitting the carrier phase measurement related information of the N carriers on one or more symbols to the LMF entity.

28. The information transmission apparatus according to claim 23 or 24, wherein the processor is configured to read the computer program in the memory to perform the following operations:
periodically transmitting the carrier phase measurement related information of the N first carriers to the LMF entity; or,
transmitting the carrier phase measurement related information of the N first carriers to the LMF entity, when determining that a measurement reporting trigger condition is met.

29. An information transmission apparatus, comprising:
a transmitting unit, configured to perform carrier phase measurement according to a second signal, and transmitting carrier phase measurement related information of N first carriers to a location management function (LMF) entity, wherein N is a positive integer.

30. An information transmission apparatus, comprising a memory, a transceiver, and a processor,
wherein the memory is configured to store a computer program; the transceiver is configured to transmit and receive data under the control of the processor; the processor is configured to read the computer program in the memory to perform the following operations:
performing carrier phase measurement according to a second signal, and transmitting carrier phase measurement related information of N first carriers to a location management function (LMF) entity, wherein N is a positive integer.

31. The information transmission apparatus according to claim 30, wherein the carrier phase measurement related information comprises at least one of the following:
carrier phase measurement values of the first carriers;
identification information of the first carriers; or
at least one parameter corresponding to the first carrier,
wherein the at least one parameter is used to indicate a correlation between the carrier phase measurement value of the first carrier and a carrier phase measurement value of a second carrier within an effective frequency-domain range where the first carrier is located.

32. The information transmission apparatus according to claim 31, wherein the carrier phase measurement related information further comprises: reliability information of the carrier phase measurement values;
wherein the reliability information comprises at least one of the following:
indication information used to indicate line of sight or non line of sight, a spectrum peak slope of a first path, a Rician factor, a carrier-to-noise ratio, a signal-to-noise ratio, a reception/transmission timing error group (Rx/Tx TEG) of a TRP, an antenna phase center offset, a reported timestamp, a reference signal received power (RSRP), a first path RSRP, an additional path RSRP, a uplink time difference of arrival (UL-TDOA), or an uplink angle of arrival (UL-AOA).

33. The information transmission apparatus according to claim 30 or 31, wherein the processor is configured to read the computer program in the memory to perform the following operations:
transmitting the carrier phase measurement related information of the N first carriers in one or more carrier components to the LMF entity.

34. The information transmission apparatus according to claim 30 or 31, wherein the processor is configured to read the computer program in the memory to perform the following operations:
transmitting the carrier phase measurement related information of the N carriers on one or more symbol to the LMF entity.

35. The information transmission apparatus according to claim 30 or 31, wherein the processor is configured to read the computer program in the memory to perform the following operations:
periodically transmitting the carrier phase measurement related information of the N first carriers to the LMF entity; or,
transmitting the carrier phase measurement related information of the N first carriers to the LMF entity, when determining that a measurement reporting trigger condition is met.

36. An information transmission apparatus, comprising:
a transmitting unit, configured to perform carrier phase measurement according to a first signal, and transmit carrier phase measurement related information of N first carriers to a location management function (LMF) entity, wherein N is a positive integer.

37. A carrier phase positioning apparatus, comprising a memory, a transceiver, and a processor,
wherein the memory is configured to store a computer program; the transceiver is configured to transmit and receive data under the control of the processor; the processor is configured to read the computer program in the memory to perform the following operations:
receiving carrier phase measurement related information of N first carriers transmitted by a terminal or a base station; wherein N is a positive integer; and
performing calculation processing on a position of the terminal based on the carrier phase measurement related information.

38. A carrier phase positioning apparatus, comprising:
a receiving unit, configured to receive carrier phase measurement related information of N first carriers transmitted by a terminal or a base station; wherein N is a positive integer; and
a processing unit, configured to perform calculation processing on a position of the terminal based on the carrier phase measurement related information.

39. A processor readable storage medium, wherein the processor readable storage medium stores a computer program, the computer program is configured to cause a processor to execute steps of the information transmission method according to any one of claims 1 to 10, or the computer program is configured to cause a processor to execute steps of the information transmission method according to any one of claims 11 to 20, or the computer program is configured to cause a processor to execute steps of the carrier phase positioning method according to any one of claims 21 to 22.
